(19) Europäisches Patentamt
European Patent Office
Office européen des brevets

(11) **EP 4 449 870 A1**

(12) **EUROPEAN PATENT APPLICATION**

(43) Date of publication:
**23.10.2024 Bulletin 2024/43**

(21) Application number: **23197414.8**

(22) Date of filing: **14.09.2023**

(51) International Patent Classification (IPC):
**A23B 4/06** (2006.01)      **A23L 3/36** (2006.01)
**A23L 5/30** (2016.01)      **A23L 13/00** (2016.01)
**A23P 20/10** (2016.01)

(52) Cooperative Patent Classification (CPC):
**A23B 4/06; A23L 3/36; A23L 5/34; A23L 13/03;
A23P 20/10;** A23L 29/206

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2023   US 202363460968 P**

(71) Applicant: **Société des Produits Nestlé S.A.
1800 Vevey (CH)**

(72) Inventors:
• **ERLE, Ulrich Johannes
Cleveland, OH, 44113 (US)**
• **GEZAHEGN, Yonas
Saint Louis, MO, 63101-1813 (US)**
• **PERDANA, Jimmy
Basking Ridge, NJ, 07920 (US)**
• **BOZON, Annabel
78462 Konstanz (DE)**

(74) Representative: **Györffy, Béla
Société des Produits Nestlé S.A.
Avenue Nestlé 55
1800 Vevey (CH)**

(54)   **A PROCESS AND COMPOSITION FOR PREPARING A CRISPY BREADED FOOD PRODUCT**

(57)   Disclosed are coated food products which products may be reheated in microwave ovens. Specifically, the present invention relates to a process and composition for preparing a breaded frozen food product. More specifically the process of the present invention provides a frozen food product that upon reheating in a microwave oven has a crispy coating, more specifically the crispy coating is crispy breading. Furthermore, the invention relates to crumb coated food products, wherein a meat, fish, poultry, vegetable, plant-based meat analogue, fruit, fungus materials or dairy product substrate is coated with particulate materials for example with crumbs or flakes.

**EP 4 449 870 A1**

**Description**

The invention is in the field of coated food products which products may be reheated in microwave ovens. Specifically, the present invention relates to a process and composition for preparing a breaded frozen food product. More specifically the process of the present invention provides a frozen food product that upon reheating in a microwave oven has a crispy coating, more specifically the crispy coating is crispy breading. Furthermore, the invention relates to crumb coated food products, wherein a meat, fish, poultry, vegetable, plant-based meat analogue, fruit, fungus materials or dairy product substrate is coated with particulate materials for example with crumbs or flakes.

There is a constant demand for frozen food products that can be conveniently reheated in a microwave oven. Unfortunately, heating of a frozen food product by a microwave oven has some drawbacks. This is especially true for breaded frozen food products, which upon reheating in a microwave oven do not become crispy. However, a crispy product would be highly desirable by consumers.

The use of a microwave oven for cooking or reheating coated products is problematic because the core tends to absorb microwaves better than the coating, leading to an unsuitable temperature gradient from inside out. As a result, moisture also tends to move from the core to the coating, making the latter soggy. Another common problem is that the product heats up unevenly and this leads to a heated product that on one side is soggy, while another part may be overly dry and hard to chew.

There have been several attempts to overcome the above problems. These either focused on providing a specific barrier layer between the water containing inner portion and the crisp outer surface see for example WO 2017/042296. Alternatively, there were approaches to have multiple layers of breaded surfaces see for example WO 1997/003572. Both approaches are similar in that they try to keep water away from the surface of the breaded food product. The fundamental problem with these types of approaches is that upon reheating steam escapes from the wet inner core. This results in that the escaped steam condenses on the still cold outer surface so that this surface becomes wet and soggy. Another common issue is moisture movement during the time of frozen storage. Products that have been stored for several months usually have visible frost on the surface. During microwaving, this ice will melt on the breading and thereby add to the sogginess.

Another approach suggested so far for providing crispiness is the use of a susceptor sleeve or plate to provide strong surface heat to a food object, thereby causing browning and crisping. However, there are several drawbacks with this approach also. The susceptors are expensive, they are difficult to recycle and represent an additional packaging element. Furthermore, they are only effective, where the food has good contact with the susceptor.

SUMMARY OF THE INVENTION

The object of the present invention was to provide a product and a preparation process thereof that at least goes part way to overcome one or more of the above-mentioned disadvantages of existing products and processes or at least provides a useful alternative. More specifically, the object of the present invention was to provide a frozen food product especially a breaded food product that is crispy after reheating the frozen food product in a microwave oven.

The object of the present invention is achieved by the subject matter of the independent claims. The dependent claims further develop the idea of the present invention.

Accordingly, the present invention in a first aspect provides a frozen food product and a process for its preparation, wherein the preparation of the frozen food product comprises the steps of:

contacting a food product with a dipping solution then
deep-freezing the product of the above step,
wherein the dipping solution at -18°C has a dielectric loss tangent of at least 0.1.

In other words, the present invention provides a frozen food product that before freezing has been contacted with a dipping solution, wherein said dipping solution at -18 °C has a dielectric loss tangent of at least 0.1

Preferably during the contacting of the food product with the dipping solution the dipping solution forms a covering layer on the food product. This means that for the present invention it is essential that some dipping solution adheres to the surface of the food product. Ideally after said contacting and before freezing the dipping solution forms a covering layer all around the food product. Preferably said dipping solution at -18°C has a dielectric loss tangent of at least 0.13, more preferably at least 0.3, more preferably at least 0.4, more preferably at least 0.5 and still more preferably a dielectric loss tangent of at least 0.6.

In a second aspect said dipping solution at -18 °C has an unfrozen water content of at least 25 wt%, preferably at least 30 wt%, more preferably at least 40 wt%, more preferably at least 50 wt%, more preferably at least 60 wt% and even more preferably at least 90 wt% of unfrozen water content. Advantageously the dipping solution has a viscosity of at least 10 [mPa.s], preferably has a viscosity of at least 30 [mPa.s], more preferably at least 50 [mPa.s]. Furthermore, the dipping solution has a viscosity of at most 1000 [mPa.s], preferably at most 500 [mPa.s], still more preferably at most 200 [mPa.s]. According to an especially preferred embodiment the dipping solution has a viscosity of at least 80 [mPa.s] and at most 200 [mPa.s].

In a preferred embodiment said dipping solution comprises

from 0 to 20 wt% edible salt, preferably sea salt,
at least 20 wt%, preferably at least 30 wt% sugar and/or polysaccharides, and water.

In a still further preferred embodiment said sugar and/or polysaccharide is selected from glucose, sucrose, lactose, trehalose, starch, modified starch, maltodextrin, modified maltodextrin, soluble corn fiber, fructo-oligosaccharides, inulin, rice syrup and any combinations thereof.

In a particularly preferred embodiment said dipping solution comprises low sodium sea salt, soluble corn fiber, glucose and water.

Preferably said contacting of the food product with the dipping solution is achieved by dipping the food product into the dipping solution or by spraying the dipping solution onto the food product. Any other methods can be used if it achieves that the food product becomes covered with said dipping solution.

According to a preferred embodiment the preparation of said food product before said dipping comprises the following steps:

a) forming a breaded food product,
b) solidifying the crust of the breaded food product of step a),
c) baking the product of step b).

Advantageously the food product is pre-fried and/or pre-baked before it is contacted with the dipping solution.

According to a further aspect of the invention the adherence of the dipping solution to the food product is facilitated by using larger particulate matters, more specifically larger breadcrumbs, cereal flakes or coconut flakes.

In a still further preferred embodiment of the present invention the food product is covered with crumbs, more specifically with breadcrumbs. In general, it is preferred that the breadcrumb has a larger average particle size. Preferably at least 30% of the breadcrumbs do not pass through a no. 20 mesh sieve. More preferably at least 40% and still more preferably at least 50% of the breadcrumbs do not pass through a no. 20 mesh sieve.

In a further aspect the present invention relates to the use of a dipping solution to improve the crispiness of a deep-frozen food product upon heating in a microwave, wherein the dipping solution at -18 °C has a dielectric loss tangent of at least 0.1. Preferably said dipping solution at -18 °C has an unfrozen water content of at least 25 wt%.

Preferably said dipping solution at -18°C has a dielectric loss tangent of at least 0.13, preferably at least 0.3, preferably at least 0.4, more preferably at least 0.5 and still more preferably a dielectric loss tangent of at least 0.6.

In a second aspect said dipping solution at -18 °C has an unfrozen water content of at least 25 wt%, preferably at least 30 wt%, more preferably at least 40 wt%, more preferably at least 50 wt%, more preferably at least 60 wt% and more preferably at least 90 wt% of unfrozen water content.

In a preferred embodiment in said use said dipping solution comprises

from 0 to 20 wt% edible salt, preferably sea salt
at least 20 wt%, preferably at least 30 wt% sugar and/or polysaccharides, and water.

In a still further preferred embodiment in said use said sugar and/or polysaccharide is selected from glucose, sucrose, lactose, trehalose, starch, modified starch, maltodextrin, modified maltodextrin, soluble corn fiber, fructo-oligosaccharides, inulin, rice syrup and any combinations thereof.

In a particularly preferred embodiment in said use said dipping solution comprises low sodium sea salt, soluble corn fiber, glucose and water.

DETAILED DESCRIPTION OF THE INVENTION

The present invention deviates from the prior art in that it does not attempt to make a product that is crispy right before freezing and then before reheating in a microwave. Rather the food product of the present invention contains a large amount of unfrozen water in its coating at -18 °C. In other words, the products according to the present invention are designed to be soggy before freezing so that they heat better in a microwave oven. The present inventors have found out that when a food product before freezing is contacted with a dipping solution which at -18 °C has a dielectric loss tangent of at least 0.1, then this food product upon reheating in a microwave oven has an especially crispy surface. This physicochemical feature enhances the ability of the coating to absorb microwaves right after the microwave oven is started. As a result, the coating achieves elevated temperatures earlier in the heating process, which, due to its salt content, creates a so-called 'thermal runaway' situation. The coating maintains a higher temperature than the core throughout the heating process, especially at the edges. This temperature profile is conducive to drying out the coating and bringing it to the glassy state, i.e., making it crispy.

According to the present invention there are no further frying or drying steps after contacting the food product with said dipping solution and before deep-freezing. Ideally the dipping is performed on a fried and/or pre-baked breaded product and then the resulting product that is covered with the dipping solution is deep-frozen.

A comparison of the heating process of a state-of-the-art product and an inventive product has been made by placing samples under an infrared camera and heating the samples in a microwave oven. The infrared image surprisingly showed a marked difference. In the case of a state-of-the-art product, we experienced an uneven heating on the surface. Some areas heated up faster and earlier while other areas on the surface remained cold for a longer time. This resulted in that the earlier heated areas dried out and the cold areas became less crispy, and part of the core became less moist and less juicy. In contrast the surface of the product according to the invention warmed up more uniformly. This has led to a uniformly crispy product which retained a moist and juicy inner core.

Another advantage of the present invention is that it provides a product with which moisture migration during storage will not be a problem. This is due to the simple fact that moisture content is already high in the crust compared to the prior art products. Thus, the present invention also solves the moisture migration problem.

The term "food product" according to the present specification relates generally to any food product that is suitable for human consumption.

The term "dipping solution" according to the present specification generally relates to an aqueous solution with which a food product can be contacted. There can be many ways to contact a dipping solution with a food product. For example, the food product can be dipped into the dipping solution or alternatively the dipping solution can be sprayed onto a food product.

The term "deep freezing" generally relates to an industrial technique that involves cooling quickly and viciously (a couple of minutes to an hour) food by exposing the food intensely to temperatures e.g., from -30 °C to -50 °C, until the product core temperature reaches -18 °C.

The term "dielectric loss tangent" (often denoted as tan $\delta$) of a material denotes quantitatively dissipation of the electrical energy due to different physical processes such as electrical conduction, dielectric relaxation, dielectric resonance and loss from non-linear processes. The dielectric loss tangent can be evaluated by tan($\delta$): $\varepsilon''/\varepsilon'$, i.e., the ratio between the lossy and lossless reaction to the electric field. In other words, the dielectric loss tangent is the ratio between the dielectric loss factor ($\varepsilon''$) and the real part of the dielectric constant ($\varepsilon'$).

Throughout this description the term "unfrozen water" is the water that remains unfrozen at temperature of -18°C.

The term "moistness" as used throughout this specification relates to the extent to which the product feels moist while chewing.

The term "crispiness" as used throughout this specification relates to the intensity of high pitch noise resulting from the crust of the product, experienced within first few chews.

**EXAMPLES**

The invention is further described with reference to the following examples. It will be appreciated that the invention as claimed is not intended to be limited in any way by these examples.

**Example 1**

*Preparation of dipping solution*

The dipping solution was prepared by weighing the dry ingredients in a beaker glass with a precision balance. Then water was added with a certain excess amount. Magnetic stir bar was used to aid dissolution of the dry ingredients. Meanwhile, the solution was heated to 80 °C until the desired amount of remaining water in the solution was reached. The resulting homogeneous solution was then transferred and stored in a sealed container to avoid moisture migration.

*Quantification of unfrozen water in dipping solution*

The amount of unfrozen water in the dipping solution was quantified using differential scanning calorimetry (DSC). A 40 $\mu$L aluminum standard crucible and its lid (Mettler-Toledo, part no. ME-00026763) were weighed. Approx. 20 mg of dipping solution was added, then the crucible was hermetically sealed with its lid and then reweighed. Weighing was carried out with a balance with 0.01 mg precision.

The analyses were performed using DSC1/700 (Mettler-Toledo GmbH, Germany) in nitrogen atmosphere with flow rate of 50 mL/min. The measurement involves i) a cooling step from 25 °C to - 40 °C followed by ii) a heating step from -40 °C to 25 °C with heating/cooling rate of 1.5 °C per minute. The measurement was carried out in triplicate.

The amount of frozen water was quantified from the melting enthalpy of ice in the dipping solution identified in the heating step between -18 °C and 0 °C compared to the melting enthalpy of ice from a pure water sample.

Frozen water in the sample = melting enthalpy of the sample / melting enthalpy of water

The amount of unfrozen water in comparison to the total water in the dipping solution sample can then be calculated as follows:

$$\text{Unfrozen water (\%)} = (1 - \text{frozen water in the sample/water content of the sample}) \times 100\%$$

*Measurement of dielectric properties*

Dielectric properties of dipping solution were measured with Agilent Network Analyzer E5071C with dielectric probe kit 85070E and Keysight software N1501A (Keysight Technologies, USA) following the Open-Ended Coaxial Line method. Measurements were recorded at a frequency of 2.45 GHz. For measurements at or below 0 °C, dipping solutions were initially stored in a -20 °C freezer prior to measurement. For measurements above 0 °C, temperature of the dipping solution was controlled in the setup as presented by Gezahegn and coworkers (Gezahegn et al. (2021). Dielectric properties of water relevant to microwave assisted thermal pasteurization and sterilization of packaged foods. Innovative Food Science & Emerging Technologies, 74, 102837). Dielectric properties of breadcrumbs were measured using an $H_{011}$ resonator connected to an Agilent Network Analyzer E5071C. The measurement was carried out at 25 °C at a frequency of 2.45 GHz.

*Table 1: Unfrozen water content and dielectric properties of the dipping solution (DS)*

|  | DS 1 | DS 2 | DS 3 | DS 4 | DS 5 |
|---|---|---|---|---|---|
| Promitor SCF 90 [g] |  | 9 | 18.5 | 18 | 37 |
| Glucose, anhydrous ultrapure [g] |  | 9 | 5.2 | 18 | 10.5 |
| Low sodium salt [g] |  | 2 | 5.5 | 4 | 11 |
| Tap water [g] | 100 | 80 | 70.8 | 60 | 41.5 |
| Melting enthalpy [J/g] | 333.7 | 207.0 | 146.3 | 110.5 | 16.6 |
| Unfrozen water per total water in dipping solution [%] | 0 | 38 | 56 | 67 | 95 |
| Viscosity [mPa.s] | 1 | 5 | 12 | 32 | 180 |
| Dielectric loss tangent at temperatures[1] |  |  |  |  |  |
| -18°C | 0.0001[a] | 0.13 | 0.30 | 0.40 | 0.67 |
| -1°C | 0.001[a] | 0.44 | 0.55 | 0.62 | 0.78 |
| 20°C | 0.13[b] | 0.39 | 0.49 | 0.56 | 0.85 |
| 80°C | 0.04[b] | 0.67 | 0.84 | 0.94 | 1.45 |
| 120°C | .03[b] | 0.59 | 0.65 | 0.68 | 0.74 |

[a] Dielectric loss tangent for ice is based on literature data according to Evans, S. (1965). Dielectric Properties of Ice and Snow-a Review. Journal of Glaciology, 5(42), 773-792. doi:10.3189/50022143000018840

[b] Dielectric loss tangent for water is based on literature data according to Gezahegn et al. (2021). Dielectric properties of water relevant to microwave assisted thermal pasteurization and sterilization of packaged foods. Innovative Food Science & Emerging Technologies, 74, 102837.

## Example 2

*Product application*

Chicken patty was prepared with the following recipe:

Table 2: Composition of the food product - chicken

| Ingredients | Weight percentage % |
|---|---|
| Chicken split breasts, with ribs | 81.5 |
| Canola oil | 5.5 |
| Water | 6.5 |
| Corn starch | 3.2 |
| Garlic powder | 0.15 |
| Pepper White Ground | 0.15 |
| Methyl cellulose | 1 |
| Wheat Gluten | 2 |

Preparation of the patty

All the dry ingredients were mixed then water was added at 4 °C and further mixed. Then, ground chicken meat was added. A patty was then prepared by taking 72 grams of the mixes and molding it into a patty. A big batch of patty can be produced at once, and then the patty can be stored frozen for further process. Then, the frozen patty was dipped in liquid batter and rolled onto Breadcrumb-Wheat Tstd Jpns (Newly Wed Foods Inc, USA). The coated patty was then fried in soybean oil at controlled temperatures between 190 and 196 °C for 30 s. The fried coated patty was then baked in a steam oven to reach at least 74 °C in the core. The resulting patty was then subjected to dipping in solutions prior to being packed and stored at -20 °C for at least 14 days prior to sensory tests.

Sample preparation for sensory test

A single frozen patty was directly placed in microwave and subjected to microwave heating at 1100 Watt for 180 s. Product was taken out from the microwave, allowed to cool for 5 minutes, and then subjected to sensory tests by eight experienced panelists.

Table 3:

| | Comp. Example 3 | Example 4 | Example 5 | Example 6 |
|---|---|---|---|---|
| **Dipping with** | **No dipping** | **DS2** | **DS4** | **DS5** |
| Chicken patty [g] | 72 | 72 | 72 | 72 |
| Liquid batter composition | | | | |
| Bleached flour [g] | 7 | 7 | 7 | 7 |
| Promitor 90 [g] | 4 | 4 | 4 | 4 |
| Soy protein isolate [g] | 1 | 1 | 1 | 1 |
| Double acting baking powder [g] | 0.5 | 0.5 | 0.5 | 0.5 |
| Soybean oil [g] | 0.5 | 0.5 | 0.5 | 0.5 |
| Water [g] | 9 | 9 | 9 | 9 |
| Breadcrumbs [g] | 12 | 12 | 12 | 12 |
| Oil absorbed during frying [g] | 15 | 15 | 15 | 15 |
| Dipping [g] | 0 | 8 | 9 | 12 |
| *Dipping solution composition* | | | | |
| Promitor 90 [%-wt] | | 9 | 18 | 37 |
| Glucose [%-wt] | | 9 | 18 | 10.5 |
| Low sodium salt [%-wt] | | 2 | 4 | 11 |

(continued)

| | Comp. Example 3 | Example 4 | Example 5 | Example 6 |
|---|---|---|---|---|
| **Dipping with** | **No dipping** | **DS2** | **DS4** | **DS5** |
| Water [%wt] | | 80 | 60 | 41.5 |
| *Sensory assessment* | | | | |
| Crispiness | 2 | 4 | 4 | 5 |
| Moistness | 5 | 5 | 6 | 6 |
| Saltiness | 3 | 4 | 4 | 5 |

Promitor 90 was sourced from Tate and Lyle. It is a soluble corn fiber with 90% non-digestible (resistant) maltodextrin (fibers). The average molecular weight of the non-digestible fiber is 1600 Da. Sensory assessment was done on a scale of 1 to 8, where 1 would be a product with breading that is soggy or chewy without any crispiness and dry center while 8 would be comparable to a deep-fried product with a very crispy breading and moist center.

**Examples 7 to 10**

Examples 7 to 10 were prepared and tested in the same way as Example 6 with the only difference that instead of Promitor different carbohydrates were used.

Table 4: Effects of using other carbohydrate ingredients than Promitor

| | Example 7 | Example 8 | Example 9 | Example 10 |
|---|---|---|---|---|
| Chicken patty [g] | 72 | 72 | 72 | 72 |
| Batter [g] | 22 | 22 | 22 | 22 |
| *Liquid batter composition* | | | | |
| Bleached flour [%-wt] | 31.30 | 31.30 | 31.30 | 31.30 |
| | 18.00 | 18.00 | 18.00 | 18.00 |
| | 4.20 | 4.20 | 4.20 | 4.20 |
| | 2.10 | 2.10 | 2.10 | 2.10 |
| | 3.50 | 3.50 | 3.50 | 3.50 |
| Water [%-wt] | 40.90 | 40.90 | 40.90 | 40.90 |
| Breadcrumbs [g] | 12 | 12 | 12 | 12 |
| Oil absorbed during frying [g] | 15 | 15 | 15 | 15 |
| Dipping [g] | 12 | 12 | 12 | 12 |
| *Dipping solution composition* | | | | |
| *Ingredient* | Maltodextrin DE 17-21 | Maltodextrin DE 30 | Rice syrup | Inulin Orafti GR |
| Amount [%-wt] | 37 | 37 | 37 | 37 |
| Glucose [%-wt] | 10.5 | 10.5 | 10.5 | 10.5 |
| Low sodium salt [%-wt] | 11 | 11 | 11 | 11 |
| Water [%wt] | 41.5 | 41.5 | 41.5 | 41.5 |
| *Sensory assessment* | | | | |
| Crispiness | 6 | 5 | 5 | 6 |
| Moistness | 5 | 5 | 5 | 5 |
| Saltiness | 5 | 5 | 5 | 5 |

**Example 11**

*Product application for a plant-based meat analogue core*

The patty was prepared as described above in Example 2 but using a plant-based meat analogue core and with a slight difference in the batter composition. Example 11 shows that a crispy reheated product can be achieved in the case of a plant-based meat analogue core also.

|  | Example 11 |
|---|---|
|  |  |
| Plant based chicken analogue [g] | 20 |
| Batter [g] | 6 |
| *Batter composition* |  |
| Bleached flour [%-wt] | 50 |
| Water [%-wt] | 50 |
| Breadcrumbs [g] | 5 |
| Oil absorbed during frying [g] | 3 |
| Dipping [g] | 4 |
| *Dipping solution composition* |  |
| Promitor 90 [%-wt] | 37 |
| Glucose [%-wt] | 10.5 |
| Low sodium salt [%-wt] | 11 |
| Water [%wt] | 41.5 |
| *Sensory assessment* |  |
| Crispiness | 5 |
| Moistness | 4 |
| Saltiness | 3 |
| Note | Crispy surface but moistness is low as the chicken analogue itself is inherently not as moist as chicken |

**Example 12 and 13**

*Product application in case when coconut flakes are used as particulate matter*

Examples 12 and 13 were prepared in a similar way as described above for Example 2. Examples 12 and 13 show the effect of using a dipping solution on a chicken product which instead of breadcrumbs is covered with coconut flakes. Our results show that a much crispier reheated product could be achieved when the coconut flake covered chicken meat patty was dipped into a dipping solution of the present invention.

|  | Example 12 | Example 13 |
|---|---|---|
|  |  |  |
| Cut chicken breast [g] | 20 | 20 |
| Bleached flour [g] | 3 | 3 |
| Spices and seasonings [g] | 0.5 | 0.5 |
| Egg [g] | 5 | 5 |

(continued)

|  | Example 12 | Example 13 |
|---|---|---|
| Coconut flakes [g] | 5 | 5 |
| Oil absorbed during frying [g] | 4 | 4 |
| Dipping [g] |  | 3 |
| *Dipping solution composition* |  |  |
| Promitor 90 [%-wt] |  | 37 |
| Glucose [%-wt] |  | 10.5 |
| Low sodium salt [%-wt] |  | 11 |
| Water [%wt] |  | 41.5 |
| *Sensory assessment* |  |  |
| Crispiness | 2 | 4 |
| Moistness | 3 | 6 |
| Saltiness | 3 | 4 |
| Note | The center meat is chewy, and the coconut flake is not crispy | The center meat is moist, and the coconut flake is markedly crispier than Example 12 |

**Claims**

1. A process for preparing a frozen food product comprising the steps of:

   1) contacting a food product with a dipping solution then
   2) deep-freezing the product of step 1, wherein the dipping solution at -18 °C has a dielectric loss tangent of at least 0.1.

2. The process according to claim 2, wherein the dipping solution at -18 °C has an unfrozen water content of at least 25 wt%

3. The process according to any preceding claim, wherein the dipping solution has a viscosity of at least 10 [mPa.s].

4. The process according to any preceding claim, wherein the dipping solution comprises

   a) from 0 to 20 wt% edible salt, preferably sea salt
   b) at least 20 wt%, preferably at least 30 wt% sugar and/or polysaccharides, and
   c) water.

5. The process according to any preceding claim, wherein the sugar and/or polysaccharide is selected from glucose, sucrose, lactose, trehalose, starch, modified starch, maltodextrin, modified maltodextrin, soluble corn fiber, fructo-oligosaccharides, inulin, rice syrup and any combinations thereof.

6. The process according to any preceding claim, wherein the dipping solution comprises low sodium sea salt, soluble corn fiber, glucose and water.

7. The process according to any preceding claim, wherein in step 1 the contacting is achieved by dipping the food product into the dipping solution or by spraying the dipping solution onto the food product.

8. The process according to any preceding claim, wherein before step 1 the following steps are performed:

a) forming a breaded food product,
b) solidifying the crust of the breaded food product of step a),
c) baking the product of step b),
d) applying the food product of step c) in step 1 of claim 1.

9. The process according to any preceding claim, wherein the breaded food product contains breadcrumbs **characterized in that** at least 30% of the breadcrumbs do not pass through a no. 20 mesh sieve, preferably at least 40% and still more preferably at least 50% of the breadcrumbs do not pass through a no. 20 mesh sieve.

10. A frozen food product that before freezing has been contacted with a dipping solution, wherein said dipping solution at -18 °C has a dielectric loss tangent of at least 0.1.

11. The frozen food product according to claim 10, wherein the dipping solution at -18 °C has an unfrozen water content of at least 25 wt%.

12. The frozen food product according to any of claims 10 to 11, wherein the dipping solution has a viscosity of at least 10 [mPa.s].

13. The frozen food product according to any of claims 10 to 12, wherein the dipping solution comprises

a) from 0 to 20 wt% edible salt, preferably sea salt
b) at least 20 wt%, preferably at least 30 wt% sugar and/or polysaccharides, and
c) water.

14. The frozen food product according to any of claims 10 to 13, wherein the sugar and/or polysaccharide is selected from glucose, sucrose, lactose, trehalose, starch, modified starch, maltodextrin, modified maltodextrin, soluble corn fiber, fructo-oligosaccharides, inulin, rice syrup and any combinations thereof.

15. The frozen food product according to any of claims 10 to 14, wherein the dipping solution comprises low sodium sea salt, soluble corn fiber, glucose and water.

16. Use of a dipping solution to improve the crispiness of a deep-frozen food product upon heating in a microwave oven, wherein the dipping solution at -18 °C has a dielectric loss tangent of at least 0.1.

17. The use according to claim 16, wherein the dipping solution at -18 °C has an unfrozen water content of at least 25 wt%.

EP 4 449 870 A1

Europäisches
Patentamt

European
Patent Office

Office européen
des brevets

**EUROPEAN SEARCH REPORT**

Application Number

EP 23 19 7414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/288590 A1 (SOANE DAVID S [US] ET AL) 15 November 2012 (2012-11-15) | 1-17 | INV. A23B4/06 |
| Y | * examples 1-4 * | 8 | A23L3/36 A23L5/30 |
| X | US 2014/178534 A1 (AMEND THOMAS ALOISIUS VALENTINUS [US] ET AL) 26 June 2014 (2014-06-26) * claim 1; example 1; table 1 * | 1-15 | A23L13/00 A23P20/10 |
| Y | EP 3 078 278 A1 (CRISP SENSATION HOLDING SA [CH]) 12 October 2016 (2016-10-12) * claim 16 * | 8 | |

TECHNICAL FIELDS SEARCHED (IPC)

A23B
A23P
A23L

The present search report has been drawn up for all claims

| Place of search | Date of completion of the search | Examiner |
|---|---|---|
| Munich | 13 February 2024 | Groh, Björn |

## ANNEX TO THE EUROPEAN SEARCH REPORT
## ON EUROPEAN PATENT APPLICATION NO.

EP 23 19 7414

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2024

| Patent document cited in search report | | | Publication date | Patent family member(s) | | | Publication date |
|---|---|---|---|---|---|---|---|
| US 2012288590 | A1 | | 15-11-2012 | AU | 2010292224 | A1 | 08-03-2012 |
| | | | | BR | 112012005204 | A2 | 24-09-2019 |
| | | | | CA | 2771343 | A1 | 17-03-2011 |
| | | | | CN | 102612323 | A | 25-07-2012 |
| | | | | EP | 2475266 | A1 | 18-07-2012 |
| | | | | NZ | 598651 | A | 25-10-2013 |
| | | | | US | 2012288590 | A1 | 15-11-2012 |
| | | | | WO | 2011031841 | A1 | 17-03-2011 |
| US 2014178534 | A1 | | 26-06-2014 | AR | 087279 | A1 | 12-03-2014 |
| | | | | BR | 112014001312 | A2 | 21-02-2017 |
| | | | | CA | 2842127 | A1 | 22-11-2012 |
| | | | | CL | 2014000162 | A1 | 01-08-2014 |
| | | | | DE | 202012011605 | U1 | 17-01-2013 |
| | | | | DE | 202012011680 | U1 | 01-02-2013 |
| | | | | EP | 2734056 | A2 | 28-05-2014 |
| | | | | ES | 2698444 | T3 | 04-02-2019 |
| | | | | IL | 230436 | A | 28-09-2017 |
| | | | | MX | 343342 | B | 01-11-2016 |
| | | | | MY | 166104 | A | 24-05-2018 |
| | | | | RU | 2014106499 | A | 27-08-2015 |
| | | | | US | 2014178534 | A1 | 26-06-2014 |
| | | | | WO | 2012156539 | A2 | 22-11-2012 |
| | | | | ZA | 201401341 | B | 23-12-2015 |
| EP 3078278 | A1 | | 12-10-2016 | AR | 104332 | A1 | 12-07-2017 |
| | | | | AU | 2016246004 | A1 | 26-10-2017 |
| | | | | BR | 112017021883 | A2 | 10-07-2018 |
| | | | | CA | 2982816 | A1 | 13-10-2016 |
| | | | | CN | 107529800 | A | 02-01-2018 |
| | | | | EP | 3078278 | A1 | 12-10-2016 |
| | | | | JP | 2018510646 | A | 19-04-2018 |
| | | | | KR | 20170134637 | A | 06-12-2017 |
| | | | | PH | 12017501842 | A1 | 26-02-2018 |
| | | | | SG | 11201708217V | A | 29-11-2017 |
| | | | | TW | 201642766 | A | 16-12-2016 |
| | | | | WO | 2016162523 | A1 | 13-10-2016 |

EPO FORM P0459

For more details about this annex : see Official Journal of the European Patent Office, No. 12/82

## REFERENCES CITED IN THE DESCRIPTION

**Patent documents cited in the description**

- WO 2017042296 A

- WO 1997003572 A

**Non-patent literature cited in the description**

- **GEZAHEGN et al.** Dielectric properties of water relevant to microwave assisted thermal pasteurization and sterilization of packaged foods. *Innovative Food Science & Emerging Technologies,* 2021, vol. 74, 102837

- **EVANS, S.** Dielectric Properties of Ice and Snow-a Review. *Journal of Glaciology,* 1965, vol. 5 (42), 773-792